Europäisches Patentamt

European Patent Office

Office européen des brevets

(11) Publication number: **0 094 136**
**B1**

# (12) EUROPEAN PATENT SPECIFICATION

(45) Date of publication of patent specification: **25.11.87**

(21) Application number: **83200660.5**

(22) Date of filing: **06.05.83**

(51) Int. Cl.⁴: **B 01 D 53/06,** C 01 B 3/56, B 01 J 20/02

(54) Process for the separation of hydrogen from a mixture of gases.

(30) Priority: **07.05.82 NL 8201885**

(43) Date of publication of application:
**16.11.83 Bulletin 83/46**

(45) Publication of the grant of the patent:
**25.11.87 Bulletin 87/48**

(84) Designated Contracting States:
**BE DE FR GB IT NL**

(56) References cited:
FR-A-1 476 510
FR-A-2 033 652
GB-A- 687 206

CHEMTECH, December 1981, page 761

(73) Proprietor: **STAMICARBON B.V.**
**Mijnweg 1**
**NL-6167 AC Geleen (NL)**

(72) Inventor: **Beenackers, Antoni A. C. M.**
**Diamantstraat 49**
**NL-7548 CH Enschede (NL)**
Inventor: **van Swaaij, Willibrordus P. M.**
**Sportlaan 60**
**NL-7581 BZ Losser (NL)**

(74) Representative: **Hoogstraten, Willem Cornelis Roeland et al**
**OCTROOIBUREAU DSM Postbus 9**
**NL-6160 MA Geleen (NL)**

## Description

The present invention generally relates to a process for the separation of hydrogen gas from a mixture of gases including the hydrogen gas by contacting a stream of the gaseous mixture with a hydride forming absorbent material.

A prior proposed hydrogen gas separation process is known from, e.g. Chem Tech, December 1981, page 761. The Chem Tech publication describes a hydrogen gas separation process wherein use is made of fixed or stationary beds of a hydride-forming absorbent material. These stationary beds of hydridable materials are then cyclically 'charged' with a gaseous stream including hydrogen gas so as to form a hydride therewith and thus separate the hydrogen gas therefrom and then 'discharged' by liberating the hydrogen gas from the hydridable material. A particular disadvantage of such a known hydrogen gas separation process is that several, usually four or more, fixed beds must be provided so as to achieve substantially continuous separation of the hydrogen gas contained in a gaseous mixture. That is, while one bed, for example, is undergoing hydrogen charging, another bed is undergoing hydrogen discharging and this procedure is alternated between the beds to effect substantial continuous separation. A further disadvantage of this known hydrogen gas separation process is that the direction of flow of the gas streams must be periodically changed requiring specific attention to critical process control parameters since the absorption efficiency of a bed of hydride-forming absorbent material decreases when the bed is overcharged, e.g., when the hydridable material is saturated with hydrogen gas in the form of its respective hydride.

Another disadvantage of this known process arises from the fact that after repeated hydrogen gas absorption/desorption cycles, the solid hydride-forming absorbent material tends to comminute or become pulverized which may result in an increased pressure drop across the beds and in the contamination of the hydrogen gas with the comminuted dust-like hydridable material particles. Thus, periodic replacement and/or complete replenishment of the fixed hydridable material beds may be required in accordance with such known hydrogen separation processes.

Yet another disadvantage of such a known process is the poor heat-transfer qualities in the packed fixed beds of hydridable material. Because of this poor heat-transfer quality, a relatively large heat-exchanging surface must be provided to extract the heat generated during hydride formation which necessarily increases respective equipment costs. In addition, both the absorption rate and the desorption rate of the hydrogen are limited, particularly for active metal alloys due to the slow heat-transfer rate associated with such conventional packed fixed beds or hydridable materials.

Briefly stated, the present invention provides a distinct advantage in the separation of hydrogen gas from a gaseous mixture containing the hydrogen gas by contacting a stream of said mixture with particulate hydride-forming material, whereby the particulate material is hydrided; characterized in that the particulate, hydride-forming material is in the form of a moving liquid suspension. While operations utilizing continuous gas-solid and (continuous) gas-(liquid-solid) slurry reactors are, in and of themselves known, the present invention is believed to be contrary to the conventional thinking in the hydrogen separation art utilizing hydridable materials in that gas-solid reactors operating on a batch basis have typically been considered necessary.

Thus, according to this invention, an absorption vessel can be utilized to contain e.g. a single or a staged moving liquid suspension of hydridable material particles and establish either cocurrent or counter-current flow of the suspension relative to the gaseous mixture stream. Charged or hydrided material will then exit the absorption vessel and will be directed to a desorption or hydrogen liberating vessel while uncharged material (e.g., material capable of being hydrided) will be drawn from the desorption vessel and redirected to the absorption vessel where the cycle repeats itself. Thus, according to the present invention, a continuous substantially closed loop cycle of charging and discharging of the hydridable material can be advantageously utilized.

An object of the present invention therefore is to obtain hydrogen gas separation from gaseous mixtures containing the hydrogen gas such that the process can advantageously be carried out in a continuous manner while realizing the highest possible absorption efficiency. A particular advantage of utilizing the process of the invention is the lower pressure drop of the gaseous mixture across the suspension. Accordingly, the necessity of supplying a relatively high pressurized stream of the gas mixture (as is customary in conventional processes) is alleviated according to the present invention.

According to the present invention, the above objectives and advantages are achieved by a process in which the hydride-forming absorbent material is suspended in finely distributed form in a liquid medium. Preferably, the suspended absorbent material is maintained in motion either by agitation or by the circulation flow established by continuously removing charged hydridable material from the absorber while continuously supplying uncharged hydridable material thereto.

Advantageously the liquid medium is in the form of a mineral or synthetic heat-resistant oil. The hydride-forming absorbent material is also preferably present in the liquid medium in a concentration in the range of between about 10 wt.% to about 70 wt.% and more preferably in the range between about 20 wt.% to about 60 wt.% to achieve particularly advantageous results. Typical examples of liquid media which can be advantageously utilized according to the present invention include polymers, dimethyl syloxane polymers, decaline, paraffinic oils and other heat and hydrogen resistant oils. As a rule the choice very much depends on the ab- and desorption temperature cycle and therefore will be different for each hydridable metal alloy in such a way that for a particular temperature cycle the viscosity and the vapour pressure preferably will be low, the hydrogen solubility preferably relatively high and the resistance for heat and hydrogen good. The choice moreover may depend on the other components present in the gas mixture.

The terms 'hydridable material' or 'hydride forming absorbent material' or the like refer to materials capable of forming hydrides when contacted with hydrogen gas under hydride-forming conditions such as a substance or a mixture of substances of the group consisting of rare earth elements, $MNi_x$, $MCo_x$, FeTi, $Mo_2Cu_y$, $Mo_2Ni_y$ and Pd, where M=Ca, Zr or a lanthanide; $1 < x < 5,5$; and $0 < y < 1$. Preferably, the hydridable material particles have average diameters of between about 0.1 to 50 micrometers.

Conversely, the terms 'hydrided materials' or 'charged hydridable materials' or the like are meant to refer to the above materials after hydrogenation thereof to form their respective hydrides.

The hydrogen gas can be conveniently recovered from the hydrided material by desorption according to techniques believed to be known to those in this art, typically by applying heat to the hydrided material so as to liberate hydrogen gas therefrom. Additionally, the steps of absorption and desorption of the hydrogen gas are advantageously practiced in separate vessels so that a closed loop charging/discharging of the hydrogen gas is established.

Heat-exchange takes place faster by virtue of the less dense flowing slurry when compared to compacted fixed beds. Thus, heat-exchange can be conveniently effected with standard heat-exchanging equipment such as, for example, conventional tube and shell heat exchangers, heat exchanging coils or the like.

The highly troublesome problem of comminution or pulverization of the hydridable material typically occurring in conventional art processes due to repetitive charging and discharging thereof is substantially avoided according to this invention and thus becomes a significant advantage in its commercial use since an increase in the reaction speed and a decrease of the hydridable material settling rate, for example, can be achieved in addition to providing less wear and stress on the process equipment.

Large-scale application of the present process would also be advantageous since the absorption and desorption steps can be tailor-made to suit a wide variety of process parameters and equipment materials by, e.g., varying the metal or the metal alloys of the hydridable particles. Accordingly, little or no adverse consequences will be attendant upon the equipment.

A non uniform temperature gradient can be established across the vessels so that everywhere in the absorption and/or desorption vessels, an optimum temperature gradient can be achieved to compensate the process between the reaction speed and the degree of hydrogen depletion in the gaseous mixture or hydrogen regeneration in the desorption vessel.

The absorbed hydrogen gas can be obtained from the desorption vessel in substantially pure form as a continuous stream at substantially the same total pressure and thus at a higher partial pressure than in the original gaseous mixture. Thus, a gas compressor need not be utilized to achieve this increase in the hydrogen gas partial pressure thereby saving additional equipment and operating costs. The suspended hydrogencontaining material can be transferred from the absorption vessel to a storage vessel or tank while continuously supplying the absorption vessel with fresh hydridable material. Compared with the usual storage of hydridable materials in fixed beds, this advantage is realized since the bed comminution and pulverization that may occur cannot lead to clogged valving mechanisms. In addition, faster charging and discharging of the storage reservoir becomes possible owing to the improved heat-transfer qualities of the suspension. It is also possible to 'fill' and 'empty' a vessel in a very short period of time by pumping the exhausted material from the vessel and replacing it with a fresh supply of hydrided material so that a maximum amount of hydrogen can be stored in the vessel in a minimum of time. Moreover, the construction of storage tanks for suspended hydridable material can be lighter than that of storage tanks for hydridable material in conventional fixed beds. In the latter situation, tensile stresses will occur in the walls of the storage tank as a result of the expansion of the fixed absorbent material beds during the charging process.

Reference will hereinafter be made to the accompanying drawings wherein like reference numerals throughout the various Figures denote like elements and wherein:

Figure 1 is a schematic diagram of the laboratory equipment utilized in conducting the experiment of Example I, below; and

Figure 2 is a schematic diagram of one embodiment of the process according to the present invention.

The present invention will be described in further detail by way of the following nonlimiting Examples.

Example I

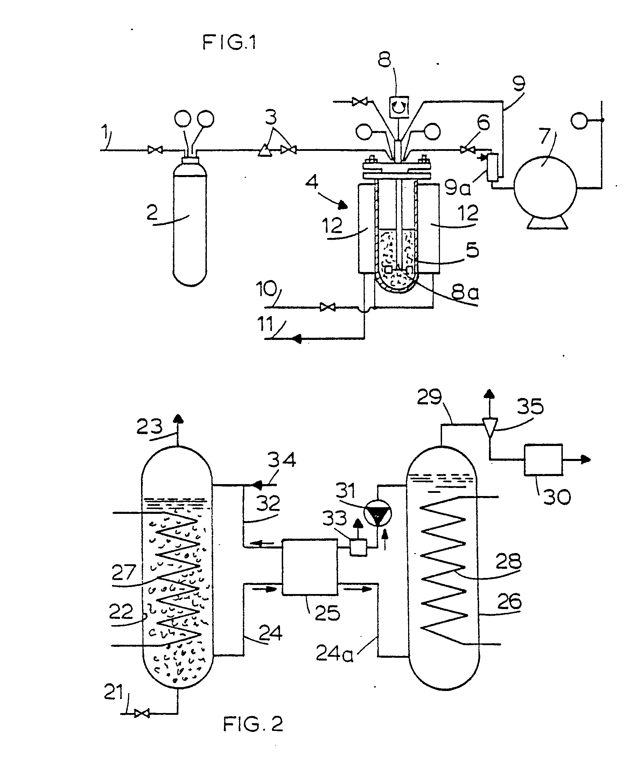

The laboratory apparatus utilized in conducting the experiments of Example I is schematically depicted in accompanying Figure 1. An autoclave 4 (2 liter capacity) was utilized as the absorption vessel and included a paddle stirrer 8a for agitating the slurry 5 containing hydridable material therein. A variable speed controller 8 was connected to the stirrer 8a so as to permit control of the rotational speed of the latter and thus permit agitation control. A heating jacket 12 having suitable controls (not shown) was operatively

associated with autoclave 4 while compressed air was supplied and discharged via lines 10 and 11, respectively, and was utilized as the cooling medium, e.g., the heat exchange medium to withdraw the heat generated during the hydride reaction so as to maintain the temperature of the hydridable material within a predetermined temperature range.

High pressure hydrogen gas (e.g., between 30 bar and 120 bar) was introduced into hydrogen storage reservoir 2 via high pressure line 1. Hydrogen gas was then withdrawn from reservoir 2 and reduced in pressure to between about 9 bar to about 11 bar by passing it through a pressure reducing valve and hydrogen gas supply valve (collectively shown by the numeral 3 in Figure 1). The reduced pressure hydrogen gas was then introduced into autoclave 4 after degassing of the reactor and the slurry by a vacuum pump connected via discharge valve 6.

Cooling water was provided for stirrer 8a by means of cooling water line 9 which also aided in the thermostating of hydrogen gas meter 9a. A wet gas meter 7 downstream of meter 9a was also utilized. Flow meter 9a gave instantaneous flow rates and gas meter 7 the total flow out of the reactor since e.g. the start of the desorption.

With the above-described apparatus, 500 grams of slurry 5 containing 20 wt.% magnesium-nickel alloy (e.g., Hy-Stor (Trade Mark) 301, a proprietary product commercially available from MPD Technology Ltd of Birmingham (UK) in an oil (methylphenylsyloxane polymer) was introduced into autoclave 4 and hydrogenated therein at a pressure of about 10 bar so that the absorption rate per unit area of gas/liquid surface contact could be determined. Stirring was effected via stirrer 8a at such a low speed that the surface of slurry 5 remained substantially smooth and thus no hydrogen gas was introduced into the oil as bubbles. The gas/liquid contact surface was about 0.0041 m$^2$.

Under these conditions and at a temperature between about 250°C and about 255°C, 1.2 moles of hydrogen gas were absorbed by the alloy in slurry 5 in a time period of about 970 minutes. Thereafter, the desorption (e.g., liberation of the hydrogen gas) was carried out by elevating the temperature of slurry 5 above its hydrogen gas liberating temperature. For the alloy utilized in this experiment, the hydrogen gas liberating temperature was between about 340°C and 360°C.

The above-described hydrogenation procedures were then repeated with the exception that an average temperature of about 260°C was utilized. Under these conditions the same amount of hydrogen gas was absorbed in only 740 minutes when compared to hydrogenation at 250°C to 255°C. The desorption or dehydrogenation of the slurry 5 was effected at a temperature of about 350°C and was practically complete in about 40 minutes, in the same autoclave, at the same stirring intensity.

Example II

The equipment schematically depicted in accompanying Figure 2 can be utilized to examine the process of the present invention on a continuous basis. Thus, whereas Example I, above, was carried out on a batch basis, the equipment depicted in Figure 2 could conveniently be utilized in a commercial production environment to separate hydrogen gas on a continuous basis.

The equipment shown in Figure 2 generally includes an absorption vessel 22 (for example, a tray column or a column packed with cooling tubes) wherein hydrogenation of the hydridable material occurs (hereinafter referred to as 'absorption' or 'charging' of the hydridable material) and a desorption vessel 26 wherein the hydrogen gas is liberated from the hydrogenated material (hereinafter referred to as 'desorption' or 'discharging' of the hydrogen gas). Coils 27, 28 can be provided in communication with the interiors of vessels 22, 26, respectively, so as to maintain the slurry containing the hydridable material therein at a desired temperature. Coil 27 can have a cooling medium circulating therein while coil 28 can have a treated medium circulating therein.

Generally, the temperature of the slurry in the absorption vessel 22 will be less than the slurry in the desorption vessel 26. While such temperatures depend upon the particular alloy or alloys utilized in the process as the hydridable material, the hydrogenation initiation temperatures thereof are generally less than the hydrogen liberation or dehydrogenation temperatures thereof. However, this temperature differential can be advantageously utilized according to the present invention by recapturing part of the excess heat energy associated with the dehydrogenation step. Thus, a heat exchanger 25 (conventionally a tube and shell heat exchanger) can be provided intermediate vessels 22 and 26 so as to 'preheat' the slurry containing hydrogenated alloy which exits vessel 22 via line 24 at a relatively lower temperature. Therefore, by virtue of the heat exchange occurring in exchanger 25 between the relatively higher temperature dehydrogenated alloy exiting vessel 26 via line 32a and the relatively lower temperature hydrogenated alloy exiting vessel 22, the temperature of the hydrogenated alloy entering vessel 26 via line 24a will be increased while the temperature of the dehydrogenated alloy entering vessel 22 via line 32 will be decreased.

As can be appreciated, the flow of the slurry containing hydridable material between vessels 22 and 26 is substantially a closed loop and such flow can be established by pump 31, which, alternatively, can be situated in line 24a depending on whether the absolute pressure in the absorption vessel or the desorption vessel is the higher of the two operating pressures. The hydrogen gas liberated in the desorption vessel 26 can be removed from the top thereof via hydrogen gas discharge line 29.

Additionally, a condenser 30 can be provided in discharge line 29 to remove residual traces of liquid from the separated hydrogen gas.

With the above-described equipment, a gas stream of mixed gases, including hydrogen gas, can be continuously introduced into absorption vessel 22 via conduit 21 at a flow rate of about 7.8 Nm³/s. The mixed gas stream can be countercurrently brought into intensive contact in absorption vessel 22 with a slurry having 30 wt.% of fine particles of a magnesium-nickel alloy in a heat-resistant oil.

A total pressure of about 10 bar and a temperature of about 250°C can be obtained in absorption vessel 22 by suitable control of the cooling medium circulating in coil 27. By preference, the gaseous stream 21 continuously supplied to the bottom of absorption vessel 22 should contain hydrogen gas in an amount of at least 20% by volume, but other volumetric quantities of hydrogen gas are also contemplated.

The absorption of hydrogen gas by a hydridable material is, of course, exothermic and such heat must be removed from absorber 22 so as to maintain the temperature therein within the desired range. Thus, such heat energy can be removed by any conventional technique, such as, by providing a cooling coil 27 in which a cooling fluid circulates as the heat transfer extraction medium.

The gas stream containing residual non-absorbed hydrogen gas exits the top of absorption vessel 22 and contains up to about 5% hydrogen therein by volume. Heat energy for desorption in vessel 26 can be achieved by combusting the residual hydrogen gas remaining in the gas stream and then utilizing the heat generated through combustion thereof as the means for elevating the temperature of the slurry in desorption vessel 26 so as to liberate hydrogen gas therefrom. In such a manner, the combustion gases can then be utilized as the heated medium circulating in coil 28.

The hydrogenated slurry exits the bottom of absorption vessel 22 via line 24 and flows to the desorption vessel 26 which may be operated at a temperature of about 370°C and a pressure of about 5 bar.

As previously mentioned, the desorption vessel 26 will be continuously supplied with heat by way of conventional heat exchanging techniques. For example, a heating coil 28 can be provided in communication with the slurry containing hydrided material in vessel 26 so that the heat energy of the fluid which circulates therein will be transferred to the hydrided material. Thus, the hydrogen gas will be liberated from the alloy by virtue of the elevated temperature in vessel 26 and can be continuously withdrawn from vessel 26 as a substantially pure hydrogen gas stream at the operating pressure of vessel 26. Optionally, a condenser and a mist eliminator 30 can be provided to further purify the hydrogen gas stream.

The regenerated slurry (i.e., the slurry in which the hydrogen gas has been liberated from the alloy) exiting the desorption vessel 26 can be continuously recycled to the top of the absorption vessel 22, optionally via the heat exchanger 25 to effect heat transfer to the hydrided slurry exiting the bottom of absorption vessel 22 as previously described.

While cocurrent flow of the slurry and removed hydrogen gas in desorption vessel 26 is shown in Figure 2, countercurrent flow therein is also contemplated according to the present invention.

In order to remove the hydridable material particles which may have become comminuted or pulverized, a classifier 33 (see Figure 2) can optionally be provided in the recycle line between the absorption and desorption vessels. Additionally, a cyclone 35 can be provided so as to remove solids which may have been entrained with the hydrogen gas. Of course, when classifier 33 and cyclone 35 are employed, make-up quantities of slurry must be added and this can conveniently be accomplished via make-up line 34.

Example III

Another embodiment will be described with reference to accompanying Figure 2. Basically, the embodiment of the present invention described below is similar to that described above with regard to Example II, with the primary exception that the absorption and desorption vessels 22, 26, respectively, can be operated utilizing controlled cooling and/or heating of the slurry so as to maintain a temperature gradient across the hydridable material slurry column in either vessel or in both.

This temperature gradient can be obtained in the absorption vessel by cooling the hydridable material slurry before it enters thereinto via line 32 and by either completely or partly adiabatically operating the absorption vessel. As a result, the temperature of the downwardly flowing slurry gradually increases due to the heat generated during the hydride-forming reaction. Thus the partial pressure of hydrogen can be relatively low in off-stream 23 due to a relative low temperature in the top of absorption vessel 22 while the overall average specific absorption rate is favoured by the higher temperature in the lower part of absorption vessel 22.

So with a temperature gradient from say 270°C (bottom) to 250°C (top) the same degree of hydrogen absorption can be obtained as in Example II, with other conditions similar, but now with a smaller column due to the increased bottom temperature.

Conversely, the desorption vessel 26 can completely or partly be adiabatically operated while applying controlled heating to the hydrided material slurry entering thereinto via line 24a. In accordance with this embodiment therefore, the heat exchange coils 27 and 28 in absorption vessel 22 and desorption vessel 26, respectively, can be omitted or reduced in size. If needed an extra heater can be installed in line 24a and an extra cooler in line 32.

It should be apparent from the foregoing examples that the process according to the present invention can, in practice be applied in a great many different ways. Use can be made of packed irrigated columns, the packing of which may be established by the tubes supplying and discharging the heat. Additionally, tray columns of practically all types could be utilised, if desired, with the heat exchanging elements being arranged on the trays.

In such equipment, a specific phase boundary surface can be established that is some ten to hundred times as large as compared to the absorption surface present in the equipment of Example I and thus a correspondingly shorter residence time can be realized.

**Claims**

1. A process for the separation of hydrogen gas from a mixture of gases by contacting a stream of said mixture with a particulate, hydride-forming material whereby the particulate material is hydrided; characterised in that the particulate, hydride-forming material is in the form of a moving liquid suspension.

2. A process according to claim 1 characterized in that the suspension flows countercurrently with respect to the stream.

3. A process according to claim 1 characterized in that the liquid medium of the suspension is a heat-resistant oil.

4. A process according to claim 1, characterized in that the particulate hydride-forming material is present in the liquid medium in a concentration of between about 10 wt.% and about 70 wt.%.

5. A process according to claim 1 characterized in that the particulate, hydride-forming material comprises a substance or a mixture of substances of the group consisting of rare earth metals, $MNi_x$, $MCo_x$, FeTi, $Mg_2Cu_y$, $Mg_2Ni_y$ and Pd; where M=Ca, Zr or a lanthanide, and $1<x<5.5$ and $0<y<1$.

6. A process according to claim 1 characterized by the further step of liberating hydrogen gas from the hydrided particulate material.

7. A process according to claim 6 characterized in that the steps of contacting the hydrogen gas and liberating the hydrogen gas are effected in separate vessels.

8. A process according to claim 1 characterized by the further step of establishing a stationary temperature gradient across the said contacting zone in the direction of flow of the stream of mixed gases.

9. A process according to claim 6 characterized by the further step of establishing a stationary temperature gradient across the zone wherein the hydrogen gas is liberated, in the direction of flow of the liberated hydrogen.

10. A process according to claim 6 or 9, characterized in that the step of liberating the hydrogen gas is practiced at a higher total pressure or a higher partial hydrogen pressure than the step of contacting the hydrogen gas.

11. Process according to claim 6 characterized in that the step of liberating the hydrogen gas is practiced by adding heat energy to the hydrided particulate material.

12. A process as in claim 11 characterized in that at least a portion of the heat energy utilized to liberate the hydrogen gas is obtained by combusting the residual hydrogen gas in the stream remaining after contacting the mixture of gases with said suspension, and effecting heat transfer between the combusted gas stream and the hydrided particulate material.

13. Process according to claim 1, characterized in that the hydrided particulate material is stored.

14. A process as in claim 13 characterized by the further step of thermally decomposing the hydride, to liberate hydrogen gas and to generate the hydridable particulate material.

**Patentansprüche**

1. Verfahren zur Abtrennung von Wasserstoffgas aus einem Gasgemisch, indem man den Strom des genannten Gemisches mit feinteiligem, Hydrid-bildendem Material in Kontakt bringt, wobei das feinteilige Material hydridiert ist, dadurch gekennzeichnet, daß das feinteilige, Hydridbildende Material in Form einer sich bewegenden flüssigen Suspension vorliegt.

2. Verfahren nach Anspruch 1, dadurch gekennzeichnet, daß die Suspension im Gegenstrom in bezug auf den Strom fließt.

3. Verfahren nach Anspruch 1, dadurch gekennzeichnet, daß das flüssige Medium der Suspension ein hitzebeständiges Öl ist.

4. Verfahren nach Anspruch 1, dadurch gekennzeichnet, daß das teilchenförmige, Hydrid-bildende Material im flüssigen Medium in einer Konzentration zwischen etwa 10 bis etwa 70 Gew.-% zugegen ist.

5. Verfahren nach Anspruch 1, dadurch gekennzeichnet, daß das teilchenförmige, Hydrid-bildende Material aus einer Substanz oder einem Gemisch von Substanzen der Gruppe umfassend Seltene Erdmetalle, $MNi_x$, $MCo_x$, FeTi, $Mg_2Cu_y$, $Mg_2Ni_y$ und Pd besteht und $1<x<5,5$ und $0<y<1$.

6. Verfahren nach Anspruch 1, gekennzeichnet durch die weitere Stufe der Freisetzung von Wasserstoffgas aus dem hydridierten feinteiligen Material.

7. Verfahren nach Anspruch 6, dadurch gekennzeichnet, daß die Stufen der Kontaktierung des Wasserstoffgases und der Freisetzung des Wasserstoffgases in getrennten Gefäßen durchgeführt werden.

8. Verfahren nach Anspruch 1, gekennzeichnet durch die weitere Stufe des Aufbaues eines stationären Temperaturgradienten durch die genannte Kontaktierungszone in der Fließrichtung des Stromes des Gasgemisches.

9. Verfahren nach Anspruch 6, gekennzeichnet durch die weitere Stufe des Aufbaues eines stationären Temperaturgradienten durch die Zone, in welcher das Wasserstoffgas freigesetzt wird, in Fließrichtung des Stromes des Gasgemisches.

10. Verfahren nach Anspruch 6 oder 9, dadurch gekennzeichnet, daß die Stufe der Freisetzung des Wasserstoffgases bei einem höheren Gesamtdruck oder einem höheren Wasserstoff-Partialdruck als in der Stufe der Kontaktierung des Wasserstoffgases durchgeführt wird.

11. Verfahren nach Anspruch 6, dadurch gekennzeichnet, daß die Stufe der Freisetzung des Wasserstoffgases durch Zufuhr von Wärmeenergie zum hydridierten feinteiligen Material durchgeführt wird.

12. Verfahren nach Anspruch 11, dadurch gekennzeichnet, daß wenigstens ein Teil der zur Freisetzung des Wasserstoffgases aufgewendeten Wärmeenergie durch Verbrennen des restlichen Wasserstoffgases im Strom, das nach der Kontaktierung des Gasgemisches mit der genannten Suspension verbleibt, und Durchführung eines Wärmeaustausches zwischen dem Verbrennungsgasstrom und dem hydridierten teilchenförmigen Material erhalten wird.

13. Verfahren nach Anspruch 1, dadurch gekennzeichnet, daß das hydridierte teilchenförmige Material abgelagert wird.

14. Verfahren nach Anspruch 13, gekennzeichnet durch die weitere Stufe der thermischen Zersetzung des Hydrids, um Wasserstoffgas freizusetzen und um das hydridierbare teilchenförmige Material zu schaffen.

## Revendications

1. Procédé de séparation d'hydrogène gazeux à partir d'un mélange de gaz, consistant à mettre en contact un courant dudit mélange avec une matière particulaire formant des hydrures de sorte que la matière particulaire est hydrurée; caractérisée en ce que la matière particulaire formant des hydrures est sous forme d'une suspension liquide en mouvement.

2. Procédé selon la revendication 1, caractérisé en ce que la suspension s'écoule à contrecourant par rapport au courant.

3. Procédé selon la revendication 1, caractérisé en ce que le milieu liquide de la suspension est une huile résistant à la chaleur.

4. Procédé selon la revendication 1, caractérisé en ce que la matière particulaire formant des hydrures est présente dans le milieu liquide en une concentration comprise entre environ 10 et 70% en poids.

5. Procédé selon la revendication 1, caractérisé en ce que la matière particulaire formant des hydrures comprend une substance ou un mélange de substances du groupe consistant en métaux de terres rares, $MNi_x$, $MCo_x$, FeTi, $Mg_2Cu_y$, $Mg_2Ni_y$ et Pd; dans lequel M=Ca, Zr ou un lanthanide, et $1<x<5,5$ et $0<y<1$.

6. Procédé selon la revendication 1, caractérisé par l'étape supplémentaire de libération d'hydrogène gazeux à partir de la matière particulaire hydrurée.

7. Procédé selon la revendication 6, caractérisée en ce que les étapes de contact de l'hydrogène gazeux et de libération de l'hydrogène gazeux sont effectués dans des récipients séparés.

8. Procédé selon la revendication 1, caractérisé par l'étape supplémentaire d'établissement d'un gradient fixe de températures en travers de ladite zone de contact dans le sens d'écoulement du courant des gaz mixtes.

9. Procédé selon la revendication 6, caractérisé par l'étape supplémentaire d'établissement d'un gradient fixe de températures en travers de la zone où l'hydrogène gazeux est libéré, dans le sens d'écoulement de l'hydrogène libéré.

10. Procédé selon la revendication 6 ou 9, caractérisé en ce qu'on effectue l'étape de libération de l'hydrogène gazeux sous une pression totale plus élevée ou une pression partielle plus élevée d'hydrogène que dans l'étape de mise en contact avec l'hydrogène gazeux.

11. Procédé selon la revendication 6, caractérisé en ce qu'on effectue l'étape de libération de l'hydrogène gazeux en ajoutant de l'énergie calorifique à la matière particulaire hydrurée.

12. Procédé selon la revendication 11, caractérisé en ce qu'on obtient une partie au moins de l'énergie calorifique servant à libérer l'hydrogène gazeux en brûlant l'hydrogène gazeux résiduel dans le courant qui demeure après contact du mélange gazeux avec ladite suspension et on effectue la transmission de chaleur entre le courant de gaz brûlé et la matière particulaire hydrurée.

13. Procédé selon la revendication 1, caractérisé en ce qu'on emmagasine la matière particulaire hydrurée.

14. Procédé selon la revendication 13, caractérisé par le stade supplémentaire de décomposition thermique de l'hydrure pour libérer l'hydrogène gazeux et produire la matière particulaire susceptible d'hydruration.

FIG.1

FIG. 2